# FASCICULE DE BREVET EUROPEEN

(11) **EP 2 505 397 B1**
(45) Date de publication et mention de la délivrance du brevet: **23.07.2014**
(21) Numéro de dépôt: 12159946.8
(22) Date de dépôt: 16.03.2012
(51) Int. Cl.: B60H 1/34

(54) **Dispositif de sortie d'air comprenant un matériau d'étancheité**
Entlüftungsvorrichtung, die ein Dichtmaterial umfasst
Air outlet device including a sealing material

(30) Priorité: 30.03.2011 FR 1152623
(43) Date de publication de la demande: 03.10.2012
(73) Titulaire: Faurecia Intérieur Industrie, 92000 Nanterre (FR)
(72) Inventeur: Gougeon, Fabien, 95120 ERMONT (FR)
(74) Mandataire: Blot, Philippe Robert Emile

(56) Documents cités:
- FR-A1- 2 645 628
- FR-A1- 2 925 400
- US-A1- 2006 014 485

## Description

La présente invention concerne un dispositif de sortie d'air d'un système d'aération pour véhicule automobile, du type comprenant au moins une première ailette, s'étendant selon une première direction et étant mobile en rotation autour d'un axe s'étendant selon la première direction, et au moins une deuxième ailette, s'étendant selon une deuxième direction, différente de la première direction, et étant mobile en rotation autour d'un axe s'étendant selon la deuxième direction, le dispositif comprenant un actionneur relié à la première et à la deuxième ailettes, ledit actionneur étant solidaire en rotation de la première ailette afin de permettre le déplacement de la première ailette autour de l'axe et étant mobile en translation sur ladite première ailette afin de permettre le déplacement de la deuxième ailette autour de l'axe, ledit actionneur étant relié à la deuxième ailette par un dispositif de connexion s'étendant entre les bords d'une ouverture pratiquée dans la deuxième ailette, au moins une partie de la deuxième ailette étant recouverte d'un matériau d'étanchéité, agencé pour assurer l'étanchéité entre la deuxième ailette et le dispositif de sortie d'air lorsque ladite deuxième ailette est dans une position extrême.

Un tel dispositif de sortie d'air est divulgué par FR 2 925 400 A1.

L'invention concerne également une planche de bord de véhicule automobile comprenant un tel dispositif de sortie d'air.

Le système d'aération de l'habitacle d'un véhicule automobile débouche généralement dans au moins un orifice prévu dans la planche de bord du véhicule. Un dispositif de sortie d'air ferme cet orifice et permet de contrôler la direction du flux d'air sortant du système d'aération.

Un tel dispositif de sortie d'air comprend par exemple un premier jeu d'ailettes sensiblement horizontales et un deuxième jeu d'ailettes sensiblement verticales, les jeux étant montés en rotation et s'étendant l'un devant l'autre en travers de l'orifice de sortie de l'air. La rotation des ailettes horizontales permet d'orienter le flux d'air vers le haut ou vers le bas et la rotation des ailettes verticales permet d'orienter le flux d'air vers la droite ou vers la gauche. Afin d'actionner les ailettes en rotation, il est prévu un actionneur, par exemple sous la forme d'une languette, relié au premier et au deuxième jeux d'ailettes et solidaire en rotation d'une ailette horizontale et mobile en translation sur celle-ci. Ainsi, la rotation de l'actionneur entraîne la rotation des ailettes horizontales, tandis que la translation de l'actionneur sur l'ailette horizontale entraîne la rotation des ailettes verticales.

Dans une position extrême du jeu d'ailettes verticales, celles-ci prennent appui les unes sur les autres afin d'obturer la sortie d'air et d'empêcher de l'air de sortir du système d'aération. Afin de garantir que l'air ne passe pas, il est connu de revêtir les parties d'ailettes en appui les unes sur les autres d'un matériau d'étanchéité assurant l'étanchéité entre les ailettes verticales.

L'actionneur est relié à une ailette verticale par un dispositif de connexion comprenant une fourche dont les branches sont reliées à l'ailette verticale et s'étendent dans une ouverture pratiquée dans cette ailette. Lorsque l'actionneur est actionné en rotation pour orienter les ailettes horizontales, les branches du dispositif de connexion peuvent heurter les bords de l'ouverture pratiquée dans l'ailette verticale, notamment lorsque la rotation de l'actionneur se fait jusqu'à une position extrême. Ce contact crée un bruit désagréable. En outre, lorsque les vibrations du véhicule sont importantes, il est également possible que ce bruit de contact se produise, par exemple si l'actionneur a été laissé dans la position extrême de rotation. Le bruit se produit alors de façon répétée, ce qui peut produire une gêne pour les occupants du véhicule.

L'un des buts de l'invention est de pallier cet inconvénient en proposant un dispositif de sortie d'air réduisant, voire supprimant, les bruits de fonctionnement du dispositif de sortie d'air.

A cet effet, l'invention concerne un dispositif de sortie d'air du type précité, dans lequel le matériau d'étanchéité recouvre au moins une partie des bords de l'ouverture pratiquée dans la deuxième ailette

Ainsi, en utilisant le matériau d'étanchéité sur les bords de l'ouverture dans laquelle s'étend le dispositif de connexion, on absorbe les bruits provoqués par le contact entre ce dispositif de connexion et les bords de l'ouverture, notamment lorsque l'actionneur est tourné dans une position extrême de la première ailette.

Selon d'autres caractéristiques du dispositif de sortie d'air de l'invention:
- le dispositif de connexion comprend une fourche dont les branches sont engagées sur une tige de connexion de la deuxième ailette, ladite tige s'étendant entre les bords de l'ouverture pratiquée dans la deuxième ailette ;
- le matériau d'étanchéité recouvre en outre la tige de connexion ;
- le matériau d'étanchéité est surmoulé sur la partie de la deuxième ailette recouverte par ledit matériau d'étanchéité ;
- le matériau d'étanchéité recouvre au moins une partie de la périphérie de la deuxième ailette ;
- la deuxième ailette comprend des perforations traversantes, le matériau d'étanchéité remplissant lesdites perforations ;
- les perforations sont réparties sur une partie de la périphérie de la deuxième ailette et sur au moins une bande de connexion reliant ladite périphérie à un bord de l'ouverture pratiquée dans la deuxième ailette ;
- le dispositif de sortie d'air comprend une pluralité de deuxièmes ailettes s'étendant selon la deuxième direction les unes à côté des autres, lesdites deuxièmes ailettes étant solidaires en rotation autour d'axes s'étendant selon la deuxième direction, l'actionneur étant fixé à l'une desdites deuxièmes ailettes de sorte que l'actionnement en translation dudit actionneur entraîne la rotation de l'ensemble desdites deuxièmes ailettes ; et
- une partie de chaque deuxième ailette est recouverte d'un matériau d'étanchéité, lesdites parties de deuxième ailette étant en appui les unes sur les autres lorsque les deuxièmes ailettes sont dans une position extrême.

L'invention concerne également une planche de bord pour véhicule automobile, du type comprenant au moins un orifice de sortie d'air, relié à un système d'aération de véhicule automobile et dans laquelle un dispositif de sortie d'air tel que décrit ci-dessus est disposé dans ledit orifice de sorte à contrôler la direction de l'air sortant dudit système d'aération.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un dispositif de sortie d'air selon l'invention,
- la Fig. 2 est une représentation schématique en perspective de l'actionneur relié à la deuxième ailette, et
- la Fig. 3 est une représentation schématique en perspective de l'autre face de la deuxième ailette de la Fig. 2.

Dans la description le terme « longitudinal » est défini selon les directions s'étendant dans le plan définit par la longueur et la largueur du véhicule automobile, c'est-à-dire un plan sensiblement horizontal, le terme « transversal » est défini selon un plan perpendiculaire au plan longitudinal, c'est-à-dire, un plan sensiblement vertical correspondant à la hauteur du véhicule automobile. Les termes « avant », « arrière » sont définis par rapport aux directions usuelles d'un véhicule automobile monté.

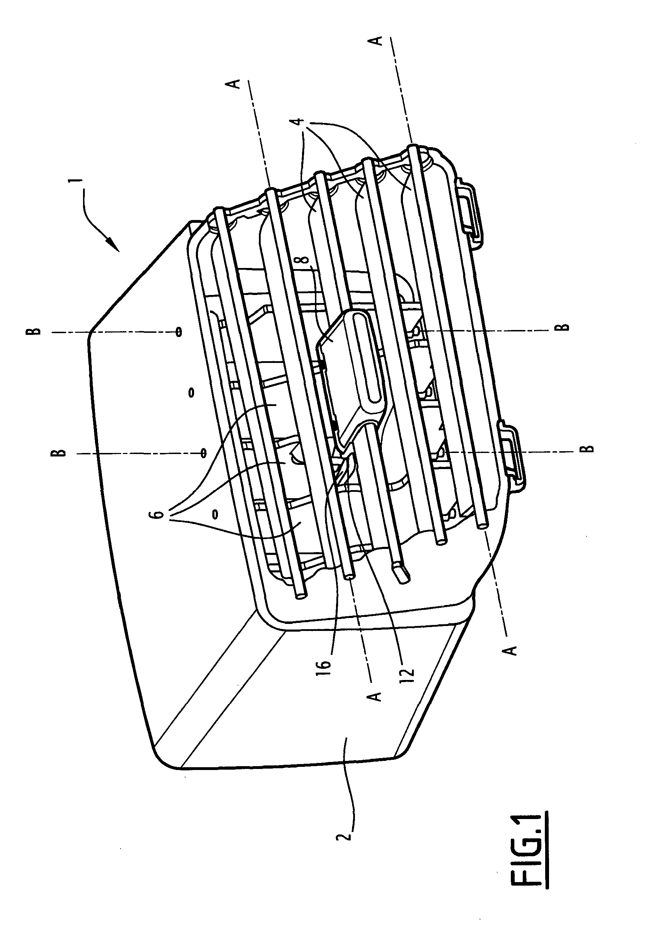

En référence à la Fig. 1, on décrit un dispositif de sortie d'air 1, destiné, de façon classique, à obturer un orifice de sortie d'air prévu dans une planche de bord (non représentée) et relié à un système d'aération (non représenté).

Le dispositif 1 comprend un corps 2 monté sur la partie extrême d'un conduit de guidage de l'air reliant le système d'aération à l'orifice de sortie d'air. Le corps 2 peut être réalisé d'une seule pièce avec le conduit de guidage de l'air. Le corps 2 est creux de façon à laisser circuler l'air.

De façon classique, un jeu de premières ailettes 4 s'étendant selon une première direction est monté en rotation en travers du corps 2. Les premières ailettes 4 sont disposées les unes au-dessus des autres de sorte à être réparties sur la hauteur du corps 2. Chaque première ailette 4 est mobile autour d'un axe A s'étendant selon la première direction et les premières ailettes 4 sont solidaires en rotation les unes des autres, c'est-à-dire que la rotation d'une première ailette 4 entraîne la rotation des autres premières ailettes 4. Selon le mode de réalisation représenté sur les figures et décrit ci-dessous, la première direction est sensiblement longitudinale.

Egalement de façon classique, le dispositif comprend un jeu de deuxièmes ailettes 6 s'étendant selon une deuxième direction, différente de la première direction, les deuxièmes ailettes 6 étant montées en rotation en travers du corps 2. Les deuxièmes ailettes 2 sont disposées les unes à côtés des autres de sorte à être réparties sur la largeur du corps 2. Chaque deuxième ailette 6 est mobile autour d'un axe B s'étendant selon la deuxième direction et les deuxièmes ailettes 6 sont solidaires en rotation les unes des autres, c'est-à-dire que la rotation d'une deuxième ailette 6 entraîne la rotation des autres deuxièmes ailettes 6. Le jeu de deuxièmes ailettes 6 s'étend devant le jeu de premières ailettes 4, de sorte que les premières ailettes 4 masquent les deuxièmes ailettes 6, comme représenté sur la Fig. 1. Selon le mode de réalisation représenté sur les figures et décrit ci-dessous, la deuxième direction est sensiblement transversale.

Chaque ailette 4 et 6 est par exemple réalisée d'une seule pièce par moulage.

Le dispositif 1 comprend un actionneur 8 agencé pour commander la rotation du jeu de premières ailettes 4 et du jeu de deuxièmes ailettes 6.

A cet effet, l'actionneur 8 est monté sur une des première ailettes 4, par exemple la première ailette 4 s'étendant sensiblement au centre du corps 2, de sorte à être solidaire en rotation de cette première ailette 4. Ainsi, un mouvement en rotation autour de l'axe longitudinal A de l'actionneur 8 entraîne le mouvement en rotation de la première ailette 4 sur laquelle l'actionneur 8 est monté et donc un mouvement de toutes les premières ailettes. Le déplacement en rotation de l'actionneur 8 se fait sensiblement du bas vers le haut et inversement et les premières ailettes 4 permettent ainsi d'orienter le flux d'air sortant du système d'aération selon une direction sensiblement verticale.

L'actionneur 8 est en outre mobile en translation sur la première ailette 4 sur laquelle l'actionneur 8 est monté entre deux positions extrêmes. Ainsi, l'actionneur 8 peut se déplacer selon l'axe longitudinal A. L'actionneur 8 comprend un dispositif de connexion 12 à une deuxième ailette 6, par exemple la deuxième ailette 6 s'étendant sensiblement au centre du corps 2, de sorte qu'un déplacement en translation de l'actionneur 8 entraîne une rotation de la deuxième ailette 6, et donc un mouvement de toutes les deuxièmes ailettes 6, autour de l'axe sensiblement transversal B. Le déplacement en translation de l'actionneur 8 se fait de droite à gauche et inversement et les deuxièmes ailettes 6 permettent ainsi d'orienter le flux d'air sortant du système d'aération selon une direction sensiblement horizontale.

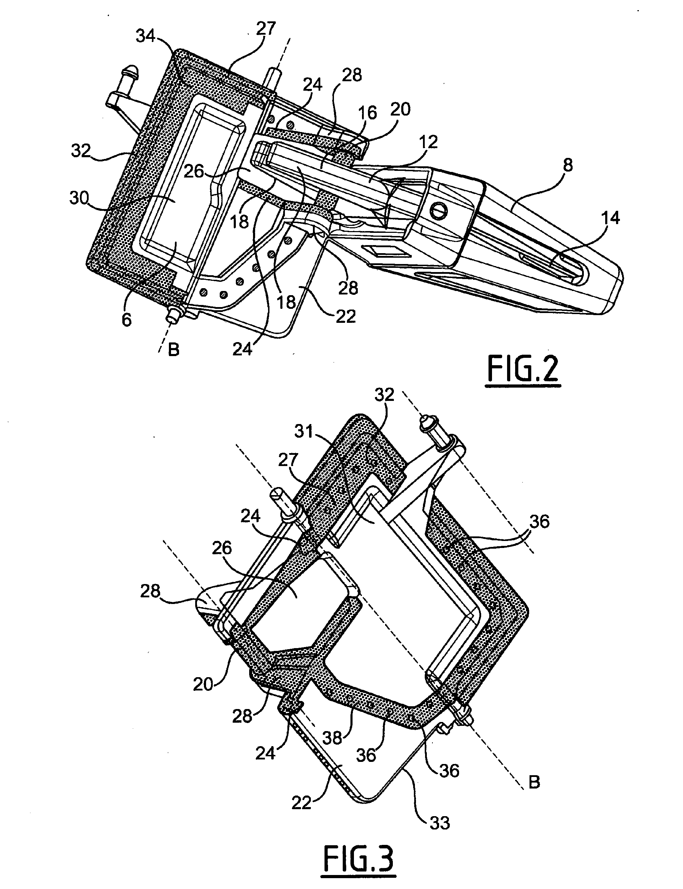

L'actionneur 8 présente une forme de languette entourant une partie de la première ailette 4, comme représenté sur les Fig. 1. A cet effet, l'actionneur 8 comprend une fente 14 longitudinale (Fig. 2) dans laquelle est disposée la première ailette 4. Un élément de friction (non représenté) est éventuellement prévu entre les parois de la fente 14 et la première ailette 4 de sorte à offrir une certaine résistance au déplacement en translation de l'actionneur 8 de sorte qu'une certaine force doit être appliquée sur l'actionneur 8 pour le déplacer. Cela empêche l'actionneur 8 de se déplacer seul sans qu'un utilisateur ne l'actionne. L'élément de friction est par exemple formé par un patin souple ou par un élément ressort ou autre.

Le dispositif de connexion 12 de l'actionneur 8 à la deuxième ailette 6 comprend une fourche 16, dont les branches 18 s'étendent longitudinalement entre l'avant de la première ailette 4 et l'arrière de la deuxième ailette 6. Les deux branches 18 sont espacées l'une de l'autre et enserrent une tige de connexion 20 s'étendant transversalement le long d'une partie du bord arrière 22 de la deuxième ailette 6 de sorte à assurer la fixation du dispositif de connexion 12 à la deuxième ailette 6. La tige de connexion 20 s'étend entre les bords longitudinaux 24 d'une ouverture 26 pratiquée dans la deuxième ailette 6 et s'étendant vers l'avant dans le plan formé par la deuxième ailette 6. L'ouverture 26 débouche dans le bord arrière 22 de la deuxième ailette 6. L'ouverture 26 est par exemple réalisée au voisinage du bord supérieur 27 de l'ailette 6. Selon le mode de réalisation représenté sur les Fig. 2 et 3, la tige de connexion 20 est par exemple décalée par rapport au plan de l'ouverture 26 et s'étend entre deux flasques 28 saillant longitudinalement d'une face 30 de l'ailette 6, de part et d'autre de l'ouverture 26, le long des bords longitudinaux 24 de celle-ci. Le fait de décaler la tige de connexion 20 par rapport au plan de la deuxième ailette 6 permet d'améliorer l'esthétisme du dispositif de sortie d'air en s'assurant que l'actionneur 8 se trouve au centre de la première ailette 4 lorsque la deuxième ailette 6 se trouve dans une position centrale, dans laquelle l'air est soufflé selon l'axe de l'orifice de sortie d'air.

Selon un mode de réalisation non représenté, la tige de connexion 20 s'étend dans le même plan que l'ouverture 26 et l'ailette 6 directement entre les bords longitudinaux 24 de cette ouverture 26.

Dans un mode de réalisation comme dans l'autre, la partie extrême libre d'au moins une des branches 18 de la fourche 16 s'étend dans l'ouverture 26 entre les bords 24 de celle-ci.

Lorsque l'actionneur 8 est déplacé en translation sur la première ailette 4 dans ses positions extrêmes, les deuxièmes ailettes 6 s'étendent sensiblement dans un même plan et son plaquées les unes contre les autres et leurs parties avant 32 sont en appui les unes contre les autres de sorte que les deuxièmes ailettes 6 obturent la sortie d'air et empêchent l'air de sortir du système d'aération vers l'habitacle du véhicule automobile. Par partie avant 32 de l'ailette, on entend la partie de l'ailette 6 s'étendant en avant de son axe de rotation B.

Afin d'assurer l'étanchéité à l'air entre les deuxièmes ailettes 6 et avec le reste du dispositif de sortie d'air 1 lorsque les ailettes 6 sont dans ces positions extrêmes, la périphérie de la partie avant 32 est revêtue d'un matériau d'étanchéité 34 sur les deux faces 30 et 31 de l'ailette 6. Plus particulièrement, le bord avant 32, ainsi que la partie avant des bords inférieur 33 et supérieur 27 de l'ailette 6 sont revêtues par le matériau d'étanchéité 34. Ce matériau d'étanchéité 34 est par exemple un matériau souple. Selon un exemple particulier, le matériau d'étanchéité 34 est du TPE (« Thermo Plastic Elastomer », c'est-à-dire un élastomère thermoplastique).

Ce matériau d'étanchéité 34 est par exemple surmoulé sur la deuxième ailette 6 lors de la réalisation de celle-ci.

Afin d'améliorer l'adhésion du matériau d'étanchéité 34 et de permettre le surmoulage des deux faces 30 et 31 de l'ailette 6, une série de perforations 36 traversant l'ailette 6 est répartie sur le long de la périphérie de la partie avant 32. Ainsi, en injectant le matériau d'étanchéité 34 sur la face 31 de l'ailette 6, ce matériau surmoule cette face 31, passe par les perforations 36 et surmoule l'autre face 32 de l'ailette 6.

Le matériau d'étanchéité 34 est en outre utilisé pour absorber les bruits de fonctionnement entre la fourche 16 et la tige de connexion 20 et les bords 24 de l'ouverture 26. En effet, du fait de sa souplesse, ce matériau d'étanchéité 34 est apte à réaliser cette absorption.

A cet effet, les bords 24 de l'ouverture 26, ainsi que la tige de connexion 20 et les flasques 28, lorsque ceux-ci sont prévus, sont également revêtus par le matériau d'étanchéité 34.

Le matériau d'étanchéité 34 est par exemple surmoulé sur les bords 24 de l'ouverture 26, sur les flasques 28 et sur la tige de connexion 20 au cours de l'opération de surmoulage de la périphérie de la partie avant 30 par le matériau d'étanchéité 34. Pour ce faire, la cavité de moulage est agencée pour que le matériau d'étanchéité 34 recouvre la périphérie de la partie avant 32 de l'ailette ainsi que le bord 24 supérieur de l'ouverture 26, dans la continuité de la partie avant du bord supérieur 27 de l'ailette, et le bord inférieur 24 de l'ouverture 26 dans la continuité du bord inférieur 33 de l'ailette 6. Comme le bord inférieur 24 de l'ouverture 26 est éloigné du bord inférieur 33 de l'ailette 6, une bande de connexion 38 s'étendant sur la face 31 entre le bord inférieur 33 de l'ailette 6 et le bord inférieur 24 de l'ouverture 26 est également surmoulée par le matériau d'étanchéité 36, comme représenté sur la Fig. 3. La cavité est en outre agencée pour que le matériau d'étanchéité 36 surmoule les flasques 28 et la tige de connexion 20 dans la continuité des bords 24 de l'ouverture 26.

Pour améliorer l'adhésion du matériau d'étanchéité 34, la bande de connexion 38 comprend également une série de perforations 36 remplies par le matériau d'étanchéité 34 lors du surmoulage.

Ainsi, l'opération de surmoulage du matériau 34 peut être réalisée en une seule étape, aussi bien pour surmouler la périphérie de la partie avant 30 de l'ailette que les bords 24 de l'ouverture et la tige de connexion 20.

Lorsque l'actionneur 8 est déplacé en rotation vers ses positions extrêmes, les branches 18 de la fourche 16 peuvent entrer en contact avec les bords 24 de l'ouverture 26 sans faire de bruit, car ce bruit est absorbé par le matériau d'étanchéité 34. De même, les bruits, dus aux vibrations du véhicule entre la fourche 18 et la tige de connexion 20 et éventuellement les bords 24 de l'ouverture 26 si l'actionneur 8 est laissé dans une position extrême, sont également absorbés par le matériau d'étanchéité 34.

Ainsi, au moyen d'un seul matériau, on assure l'étanchéité à l'air des deuxièmes ailettes 6 lorsqu'elles sont placées dans une position extrême et l'absorption des bruits de fonctionnement du dispositif de sortie d'air.

Dans le dispositif de sortie d'air 1 décrit ci-dessus, la première direction est la direction longitudinale et la deuxième direction est la direction transversale. Selon un autre mode de réalisation, la première direction est la direction transversale et la deuxième direction est la direction longitudinale. Selon encore un autre mode de réalisation, les première et deuxième directions ne sont pas perpendiculaires l'une par rapport à l'autre.

Le dispositif de sortie d'air 1 décrit ci-dessus a été décrit en relation avec une planche de bord, il peut bien entendu être utilisé avec d'autres pièces d'un véhicule automobile dans lesquelles un orifice de sortie d'air est prévu.

## Revendications

1. Dispositif de sortie d'air (1) d'un système d'aération pour véhicule automobile, comprenant au moins une première ailette (4), s'étendant selon une première direction et étant mobile en rotation autour d'un axe (A) s'étendant selon la première direction, et au moins une deuxième ailette (6), s'étendant selon une deuxième direction, différente de la première direction, et étant mobile en rotation autour d'un axe (B) s'étendant selon la deuxième direction, le dispositif comprenant un actionneur (8) relié à la première (4) et à la deuxième (6) ailettes, ledit actionneur (8) étant solidaire en rotation de la première ailette (4) afin de permettre le déplacement de la première ailette (4) autour de l'axe (A) et étant mobile en translation sur ladite première ailette (4) afin de permettre le déplacement de la deuxième ailette (6) autour de l'axe (B), ledit actionneur (8) étant relié à la deuxième ailette (6) par un dispositif de connexion (12) s'étendant entre les bords (24) d'une ouverture (26) pratiquée dans la deuxième ailette (6), au moins une partie de la deuxième ailette (6) étant recouverte d'un matériau d'étanchéité (34), agencé pour assurer l'étanchéité entre la deuxième ailette (6) et le dispositif de sortie d'air lorsque ladite deuxième ailette (6) est dans une position extrême, **caractérisé en ce que** le matériau d'étanchéité (34) recouvre au moins une partie des bords (24) de l'ouverture (26) pratiquée dans la deuxième ailette (6).

2. Dispositif de sortie d'air selon la revendication 1, **caractérisé en ce que** le dispositif de connexion (12) comprend une fourche (16) dont les branches (18) sont engagées sur une tige de connexion (20) de la deuxième ailette (6), ladite tige (20) s'étendant entre les bords (24) de l'ouverture (26) pratiquée dans la deuxième ailette (6).

3. Dispositif de sortie d'air selon la revendication 2, **caractérisé en ce que** le matériau d'étanchéité (34) recouvre en outre la tige de connexion (20).

4. Dispositif de sortie d'air selon l'une quelconque des revendications 1 à 3, **caractérisé en ce que** le matériau d'étanchéité (34) est surmoulé sur la partie de la deuxième ailette (6) recouverte par ledit matériau d'étanchéité (34).

5. Dispositif de sortie d'air selon l'une quelconque des revendications 1 à 4, **caractérisé en ce que** le matériau d'étanchéité (34) recouvre au moins une partie de la périphérie de la deuxième ailette (6).

6. Dispositif de sortie d'air selon l'une quelconque des revendications 1 à 5, **caractérisé en ce que** la deuxième ailette (6) comprend des perforations (36) traversantes, le matériau d'étanchéité (34) remplissant lesdites perforations (36).

7. Dispositif de sortie d'air selon la revendications 6, **caractérisé en ce que** les perforations (36) sont réparties sur une partie de la périphérie de la deuxième ailette (6) et sur au moins une bande de connexion (38) reliant ladite périphérie à un bord (24) de l'ouverture (26) pratiquée dans la deuxième ailette (6).

8. Dispositif de sortie d'air selon l'une quelconque des revendications 1 à 7, **caractérisé en ce qu'**il comprend une pluralité de deuxièmes ailettes (6) s'étendant selon la deuxième direction les unes à côté des autres, lesdites deuxièmes ailettes (6) étant solidaires en rotation autour d'axes (B) s'étendant selon la deuxième direction, l'actionneur (8) étant fixé à l'une desdites deuxièmes ailettes (6) de sorte que l'actionnement en translation dudit actionneur (8) entraîne la rotation de l'ensemble desdites deuxièmes ailettes (6).

9. Dispositif de sortie d'air selon la revendication 8, **caractérisé en ce que** une partie de chaque deuxième ailette (6) est recouverte d'un matériau d'étanchéité (34), lesdites parties de deuxième ailette (6) étant en appui les unes sur les autres lorsque les deuxièmes ailettes (6) sont dans une position extrême.

10. Planche de bord pour véhicule automobile, ladite planche de bord comprenant au moins un orifice de sortie d'air, relié à un système d'aération du véhicule automobile, **caractérisé en ce qu'**un dispositif de sortie d'air (1) selon l'une quelconque des revendications 1 à 9 est disposé dans ledit orifice de sorte à contrôler la direction du flux d'air sortant dudit système d'aération.

## Patentansprüche

1. Luftauslassvorrichtung (1) eines Belüftungssystems für ein Kraftfahrzeug, aufweisend mindestens einen ersten Flügel (4), der sich entlang einer ersten Richtung erstreckt und um eine Achse (A), die sich entlang der ersten Richtung erstreckt, drehbar bewegbar ist, und mindestens einen zweiten Flügel (6), der sich entlang einer zweiten Richtung erstreckt, die sich von der ersten Richtung unterscheidet, und der um eine Achse (B), die sich entlang der zweiten Richtung erstreckt, drehbar bewegbar ist, wobei die Vorrichtung aufweist: ein Betätigungselement (8), das mit dem ersten (4) und mit dem zweiten (6) Flügel verbunden ist, wobei das Betätigungselement (8) mit dem ersten Flügel (4) drehfest ist, um das Bewegen des ersten Flügels (4) um die Achse (A) zu ermöglichen, und an dem ersten Flügel (4) in Translation bewegbar ist, um das Bewegen des zweiten Flügels (6) um die Achse (B) zu ermöglichen, wobei das Betätigungselement (8) mit dem zweiten Flügel (6) durch eine Verbindungsvorrichtung (12) verbunden ist, die sich zwischen den Rändern (24) einer Öffnung (26) erstreckt, die in dem zweiten Flügel (6) ausgebildet ist, wobei zumindest ein Teil des zweiten Flügels (6) durch ein Dichtungsmaterial (34) bedeckt ist, das vorgesehen ist, um die Abdichtung zwischen dem zweiten Flügel (6) und der Luftauslassvorrichtung sicherzustellen, wenn der zweite Flügel (6) in einer äußersten Position ist, **dadurch gekennzeichnet, dass** das Dichtungsmaterial (34) zumindest einen Teil der Ränder (24) der Öffnung (26) bedeckt, die in dem zweiten Flügel (6) ausgebildet ist.

2. Luftauslassvorrichtung gemäß Anspruch 1, **dadurch gekennzeichnet, dass** die Verbindungsvorrichtung (12) ein Gabelstück (16) aufweist, dessen Arme (18) an einer Verbindungsstange (20) des zweiten Flügels (6) angreifen, wobei sich die Stange (20) zwischen den Rändern (24) der Öffnung (26) erstreckt, die in dem zweiten Flügel (6) ausgebildet ist.

3. Luftauslassvorrichtung gemäß Anspruch 2, **dadurch gekennzeichnet, dass** das Dichtungsmaterial (34) ferner die Verbindungsstange (20) bedeckt.

4. Luftauslassvorrichtung gemäß irgendeinem der Ansprüche 1 bis 3, **dadurch gekennzeichnet, dass** das Dichtungsmaterial (34) an dem Teil des zweiten Flügels (6), der durch das Dichtungsmaterial (34) bedeckt ist, angeformt ist.

5. Luftauslassvorrichtung gemäß irgendeinem der Ansprüche 1 bis 4, **dadurch gekennzeichnet, dass** das Dichtungsmaterial (34) zumindest einen Teil des Umfangs des zweiten Flügels (6) bedeckt.

6. Luftauslassvorrichtung gemäß irgendeinem der Ansprüche 1 bis 5, **dadurch gekennzeichnet, dass** der zweite Flügel (6) durchgängige Perforationen (36) aufweist, wobei das Dichtungsmaterial (34) die Perforationen (36) ausfüllt.

7. Luftauslassvorrichtung gemäß Anspruch 6, **dadurch gekennzeichnet, dass** die Perforationen (36) auf einem Teil des Umfangs des zweiten Flügels (6) und auf mindestens einem Verbindungsband (38) verteilt sind, das den Umfang mit einem Rand (24) der Öffnung (26) verbindet, die in dem zweiten Flügel (6) ausgebildet ist.

8. Luftauslassvorrichtung gemäß irgendeinem der Ansprüche 1 bis 7, **dadurch gekennzeichnet, dass** sie eine Mehrzahl von zweiten Flügeln (6) aufweist, die sich entlang der zweiten Richtung nebeneinander erstrecken, wobei die zweiten Flügel (6) um Achsen (B) drehfest sind, die sich entlang der zweiten Richtung erstrecken, wobei das Betätigungselement (8) an dem einen der zweiten Flügel (6) befestigt ist, so dass das Betätigen des Betätigungselements (8) in Translation das Drehen der Gesamtheit der zweiten Flügel (6) verursacht.

9. Luftauslassvorrichtung gemäß Anspruch 8, **dadurch gekennzeichnet, dass** ein Teil jedes zweiten Flügels (6) durch ein Dichtungsmaterial (34) bedeckt ist, wobei die Teile des zweiten Flügels (6) aneinander abgestützt sind, wenn sich die zweiten Flügel (6) in einer äußersten Position befinden.

10. Armaturenbrett für ein Kraftfahrzeug, wobei das Armaturenbrett mindestens eine Luftauslassöffnung aufweist, die mit einem Belüftungssystem des Kraftfahrzeugs verbunden ist, **dadurch gekennzeichnet, dass** eine Luftauslassvorrichtung (1) gemäß irgendeinem der Ansprüche 1 bis 9 in der Öffnung angeordnet ist, um die Richtung des aus dem Belüftungssystem austretenden Luftstroms zu steuern.

## Claims

1. - Air outlet device (1) of a ventilation system for an automotive vehicle, comprising at least a first fin (4) extending in a first direction and displaceable in rotation about an axis (A) extending in the first direction, and at least a second fin (6) extending in a second direction different from the first direction and displaceable in rotation about an axis (B) extending in the second direction, the device having an actuator (8) connected to the first (4) and second (6) fins, said actuator (8) being rotatable in unison with the first fin (4) to enable the displacement of the first fin (4) about the axis (A) and being displaceable in translation on said first fin (4) to enable the displacement of the second fin (6) about the axis (B), said actuator (8) being connected to the second fin (6) by a connecting device (12) extending between the edges (24) of an opening (26) disposed in the second fin (6), at least a part of the second fin (6) being covered by a sealing material (34) arranged so as to provide a seal between the second fin (6) and the air outlet device when said second fin (6) is in an extreme position, **characterised in that** the sealing material (34) covers at least a part of the edges (24) of the opening (26) disposed in the second fin (6).

2. - Air outlet device as claimed in claim 1, **characterised in that** the connecting device (12) comprises a fork (16), the branches (18) of which are engaged on a connecting rod (20) of the second fin (6), said rod (20) extending between the edges (24) of the opening (26) disposed in the second fin (6).

3. - Air outlet device as claimed in claim 2, **characterised in that** the sealing material (34) also covers the connecting rod (20).

4. - Air outlet device as claimed in any one of claims 1 to 3, **characterised in that** the sealing material (34) is moulded onto the part of the second fin (6) covered by said sealing material (34).

5. - Air outlet device as claimed in any one of claims 1 to 4, **characterised in that** the sealing material (34) covers at least a part of the periphery of the second fin (6) .

6. - Air outlet device as claimed in any one of claims 1 to 5, **characterised in that** the second fin (6) has perforations (36) extending through it and the sealing material (34) fills said perforations (36).

7. - Air outlet device as claimed in claim 6, **characterised in that** the perforations (36) are distributed across a part of the periphery of the second fin (6) and across at least a connecting strip (38) connecting said periphery to an edge (24) of the opening (26) disposed in the second fin (6).

8. - Air outlet device as claimed in any one of claims 1 to 7, **characterised in that** it comprises a plurality of second fins (6) extending side by side in the second direction, said second fins (6) rotating in unison about axes (B) extending in the second direction, the actuator (8) being affixed to one of said second fins (6) so that the actuating movement of said actuator (8) in translation drives the rotating movement of all of said second fins (6) .

9. - Air outlet device as claimed in claim 8, **characterised in that** a part of each second fin (6) is covered by a sealing material (34), said parts of the second fin (6) being supported one on the other when the second fins (6) are in an extreme position.

10. - Dashboard for an automotive vehicle, said dashboard having at least one air outlet orifice connected to a ventilation system of the automotive vehicle, **characterised in that** an air outlet device (1) as claimed in any one of claims 1 to 9 is disposed in said outlet orifice in order to control the direction of the air flow leaving said ventilation system.
